# EUROPÄISCHE PATENTSCHRIFT

(11) **EP 1 523 637 B1**
(45) Veröffentlichungstag und Bekanntmachung des Hinweises auf die Patenterteilung: **18.10.2006**
(21) Anmeldenummer: 02800499.2
(22) Anmeldetag: 10.08.2002
(51) Int. Cl.: F16N 11/08

(54) **DOSIERVORRICHTUNG FÜR SCHMIERSTOFF**
DOSING DEVICE FOR LUBRICANT
DISPOSITIF DE DOSAGE POUR LUBRIFIANT

(30) Priorität: 19.07.2002 DE 10227496
(43) Veröffentlichungstag der Anmeldung: 20.04.2005
(73) Patentinhaber: Perma-Tec GmbH & Co. KG, 97717 Euerdorf (DE)
(72) Erfinder: WEIGAND, Michael, 97725 Elfershausen (DE); SCHEIT, Bernd, 97708 Bad Bocklet (DE); BRAND, Stefan, 97688 Bad Kissingen (DE); HILDENBRAND, Thomas, 97769 Bad Brückenau (DE)
(74) Vertreter: Albrecht, Rainer Harald
(86) Internationale Anmeldenummer: PCT/EP2002/008977
(87) Internationale Veröffentlichungsnummer: WO 2004/001279

(56) Entgegenhaltungen:
- EP-A- 1 213 529
- DE-A- 10 119 688
- DE-U- 9 214 096

## Beschreibung

Die Erfindung betrifft eine Dosiervorrichtung für Schmierstoff mit einem Schmierstoffvorratsbehälter, einem auf einer Gewindespindel angeordneten Kolben innerhalb des Schmierstoffvorratsbehälters und einem Antriebskopf, der eine an die Gewindespindel angeschlossene Antriebswelle und einen elektromechanischen Antrieb zur Betätigung der Antriebswelle aufweist.

Bei einer aus EP-A 0 845 631 bekannten Ausführung weist der elektromechanische Antrieb eine Gewindespindel auf, die von einem Getriebemotor angetrieben ist. Der Schmierstoffvorratsbehälter ist mit einer Austrittsöffnung für Schmierstoff versehen, der mit einer Kolbenbewegung ausgepresst wird. Der im Schmierstoffvorratsbehälter erreichbare Druckaufbau ist begrenzt. Wenn sich an der Austrittsöffnung oder in einer anschließenden Leitung ein großer Fließwiderstand aufbaut, spricht eine Überlastschutzeinrichtung an, die den elektromechanischen Antrieb abschaltet. Die Versorgung der Schmierstellen mit Schmiermitteln ist nicht immer gewährleistet. Bei der bekannten Ausführung ist ferner der Wechsel des Schmierstoffvorratsbehälters aufwendig. Nachgeordnete Leitungssysteme müssen von dem Schmierstoffvorratsbehälter gelöst werden. Sofern der elektromechanische Antrieb extern mit Strom versorgt wird und/oder der Schmierstoffspender an eine Zentralsteuerung angeschlossen ist, müssen elektrische Steckverbindungen von dem Gehäuse abgezogen werden, bevor das den elektromechanischen Antrieb enthaltende Gehäuse von dem Schmierstoffvorratsbehälter abgeschraubt werden kann.

Aus der Praxis sind ferner Schmierstoffspender bekannt, die aus einer in einem Gehäuse angeordneten Kolbenpumpe und einem lösbar mit dem Gehäuse verbundenen Schmierstoffvorratsbehälter bestehen. An der Saugseite der Kolbenpumpe schließt ein gehäusefester Kanal an, der in den Schmierstoffvorratsbehälter einmündet. Das Gehäuse, in dem die Kolbenpumpe, eine Steuereinrichtung und ggf. Batterien zur Stromversorgung der Kolbenpumpe angeordnet sind, weist einen Auslasskanal auf, der mit der Druckseite der Kolbenpumpe verbunden ist. Der Schmierstoffvorratsbehälter enthält einen federbelastenden Kolben oder Faltenbalg, der den Schmierstoffvorrat unter Druck setzt und das zumeist sehr viskose Schmiermittel, z. B. Schmierfett, der Kolbenpumpe saugseitig zuführt. Durch die ständige Druckbeaufschlagung des Schmiermittelvorrats besteht die Gefahr, dass der Schmierstoff ausblutet, d. h., dass unter der Druckbeaufschlagung durch den Kolben ständig geringe Ölmengen aus dem Fett ausgepresst werden und sich das Schmierfett dadurch verfestigt. Die Kolbenpumpe stellt ferner ein verhältnismäßig aufwendiges und teures Aggregat dar. Aus EP 1213529 A ist ferner eine Dosiervorrichtung für Schmierstoff bekannt, wobei die Schmierstoffmenge durch eine elektronische Steuerung der Zahl der Umdrehungen eines Ritzels dosiert wird.

Der Erfindung liegt die Aufgabe zugrunde, einen elektromechanisch betriebenen Schmierstoffspender anzugeben, der einfach aufgebaut ist und einen exakt dosierten Schmierstoffaustrag mit hohem Auspressdruck ermöglicht. Der Schmierstoffvorrat soll nicht von einem druckfederbelasteten Kolben beaufschlagt sein. um die Gefahr eines Ausblutens zu vermeiden.

Ausgehend von einer Dosiervorrichtung des eingangs beschriebenen Aufbaues wird die Aufgabe erfindungsgemäß dadurch gelöst,
dass die Antriebswelle einen Schmierstoffdurchlasskanal enthält, der in den Schmierstoffvorratsraum des Schmierstoffvorratsbehälters mündet,
dass in den Schmierstoffdurchlasskanal der Antriebswelle ein Stößel eingesetzt ist, der eine Axialbohrung mit einem einlassseitigen Rückschlagventil sowie einen drehfest angeordneten und von einer Druckfeder belasteten Stößelkopf aufweist, und
dass der Stößelkopf unter der Wirkung der Druckfeder an einer Steuerfläche der Antriebswelle anliegt,
wobei die Steuerfläche und die zugeordnete Kontaktfläche des Stößelkopfes als Kulissenflächen ausgebildet sind, die bei einer Drehbewegung der Steuerfläche Hubbewegungen des Stößels bewirken, welche den Schmierstoff durch die Bohrung des Stößels zu einem Schmierstoffauslass am Stößelende fördern.

Nach einer Drehung der Antriebswelle und der an die Antriebswelle angeschlossenen Gewindespindel führt der im Schmierstoffvorratsbehälter angeordnete Kolben nach Maßgabe der Gewindesteigung der Gewindespindel eine Stellbewegung aus, wobei Schmierstoff aus dem Schmierstoffvorratsbehälter verdrängt und dem Schmierstoffdurchlasskanal der Antriebswelle zugeführt wird. Gleichzeitig führt der Stößel bei einer Drehung der Antriebswelle Hubbewegungen aus, die durch die Kulissenflächen gesteuert sind. Bei einwärts gerichteter Stößelbewegung öffnet sich das Rückschlagventil und gelangt Schmierstoff in die Axialbohrung des Stößels. Bei einer anschließenden auswärts gerichteten Stößelbewegung schließt das Rückschlagventil und wird eine durch den Stößelhub definierte Schmiermittelmenge aus der Axialbohrung des Stößels ausgestoßen. Bei der erfindungsgemäßen Vorrichtung sind die Stellbewegungen des Kolbens im Vorratsbehälter und die Stößelbewegungen kinematisch gekoppelt. Durch die Bewegung des Kolbens wird der Schmierstoffkanal zwangsweise befüllt. Der Schmierstoffaustrag erfolgt dann durch die Stößelbewegung, wobei ein hoher Auspressdruck erreichbar ist. Die Kulissenflächen, welche die Stößelbewegungen bestimmen, und die Gewindesteigung der Gewindespindel, welche die Stellbewegungen des im Vorratsbehälter angeordneten Kolbens festlegt, sind in geeigneter Weise aufeinander abgestimmt. Die Kulissenflächen der Steuerfläche und der zugeordneten Kontaktfläche des Stößelkopfes sind komplementär ausgebildet und weisen keilförmige Gleitflächen und daran anschließende Absätze auf.

Es ergeben sich zahlreiche Möglichkeiten für die weitere konstruktive Ausgestaltung der erfindungsgemäßen Vorrichtung. Im Rahmen der Erfindung liegt es, dass an die Antriebswelle endseitig ein im Antriebskopf axial abgestütztes Zahnrad angeschlossen oder angeformt ist, das mit einem Ritzel des Elektromotors im Eingriff steht und die Steuerfläche für die Stößelbewegungen aufweist. Gemäß einer bevorzugten Ausgestaltung ist ferner eine Überlastkupplung vorgesehen, die einerseits aus einer an die Antriebswelle angeformten Kupplungsscheibe und andererseits von einem die Antriebswelle antreibenden Zahnrad gebildet wird, wobei das Zahnrad außerdem die mit dem Stößelkopf zusammenwirkende Steuerfläche aufweist. Die Überlastkupplung ist an der Stelle des Wellenstrangs vorgesehen, an dem das größte Drehmoment auftreten kann. Sie spricht an, wenn das Drehmoment einen Grenzwert überschreitet und schützt die Vorrichtung vor irreversiblen Beschädigung. Das Auftreten eines die Überlastkupplung auslösenden Drehmomentes kann verschiedene Ursachen haben. So nimmt das Antriebsmoment zu, wenn der Schmierstoff sich beispielsweise bei tiefen Temperaturen verfestigt, der Schmierstoffauslass verstopft ist oder der Kolben nach einer vollständigen Entleerung des Schmierstoffvorratsbehälters an einer Gehäusefläche anschlägt.

Eine besonders bevorzugte konstruktive Ausführung sieht vor, dass das Zahnrad einen Zahnkranz aufweist, der einen Aufnahmeraum für die an den Stößel angeformte Kupplungsscheibe ringförmig umschließt. Das Zahnrad ist auf die Kupplungsscheibe aufgesetzt und am Umfang der Kupplungsscheibe drehbeweglich geführt. Der Boden des Aufnahmeraumes weist ein Kupplungsprofil aus Erhebungen oder Vertiefungen auf, das mit Gegenflächen an der Kupplungsscheibe im Eingriff steht. Diese Ausführung arbeitet nach Art einer axialen Zahnkupplung, wobei das Kupplungsprofil vorzugsweise aus radialen Stegen und Vertiefungen besteht. Das auf die Kupplungsscheibe aufgesetzte Zahnrad bedarf einer axialen Lagerung und ist vorzugsweise mit einer ringförmigen axial gelagerten Bundfläche versehen. Gemäß einer bevorzugten Ausführung der Erfindung weist der Antriebskopf eine Montageplatte auf, an der ein Elektromotor befestigt und die Antriebswelle gelagert ist und an der außerdem Stellelemente angeordnet sind, die an der ringförmigen Bundfläche des Zahnrades anliegen und das Zahnrad mit einer Andruckkraft, die auf das von der Überlastkupplung zu übertragende Moment abgestimmt ist, an der Kupplungsscheibe halten. Die Stellelemente sind zweckmäßig als Federelemente ausgebildet.

An den Stößelkopf kann ein Gabelarm als Drehsicherung angeformt sein, der mit einem gehäusefesten Element des Antriebskopfes zusammenwirkt.

Im Rahmen der Erfindung liegt es ferner, dass der Antriebskopf mit einer Messeinrichtung zur Erfassung der von dem Stößel ausgeführten Kolbenhübe ausgerüstet ist. Vorzugsweise ist an dem Stößelkopf ein Zapfen angeformt, der mit der Messeinrichtung zusammenwirkt und bei jeder Hubbewegung einen Zählimpuls auslöst.

Weitere Ausgestaltungen der erfindungsgemäßen Vorrichtung sind in den Patentansprüchen 9 bis 19 beschrieben und werden im Folgenden anhand von Ausführungsbeispielen erläutert. Es zeigen schematisch
- Fig. 1: einen Längsschnitt durch eine erfindungsgemäße Dosiervorrichtung,
- Fig. 2: den Antriebskopf der in Fig. 1 dargestellten Dosiervorrichtung in einer gegenüber Fig. 1 vergrößerten, perspektivischen Darstellung,
- Fig. 3: eine weitere Ausgestaltung des Antriebskopfes im montierten Zustand,
- Fig. 4: eine Explosionsdarstellung des Antriebskopfes,
- Fig. 5: einen Ausschnitt aus der in den Fig. 3 und 4 dargestellten Vorrichtung im montierten Zustand,
- Fig. 6: eine Schmierstoffkartusche zur Verwendung mit dem in Fig. 3 bis 5 dargestellten Antriebskopf,
- Fig. 7: eine Dosiervorrichtung aus den in den Fig. 3 bis 6 dargestellten Baugruppen,
- Fig. 8: einen Schnitt durch ein Rückschlagventil, das in der Vorrichtung eingebaut ist, in einer stark vergrößerten Darstellung und
- Fig. 9a und 9b: unterschiedliche Funktionsstellungen der Dosiervorrichtung im Betrieb.

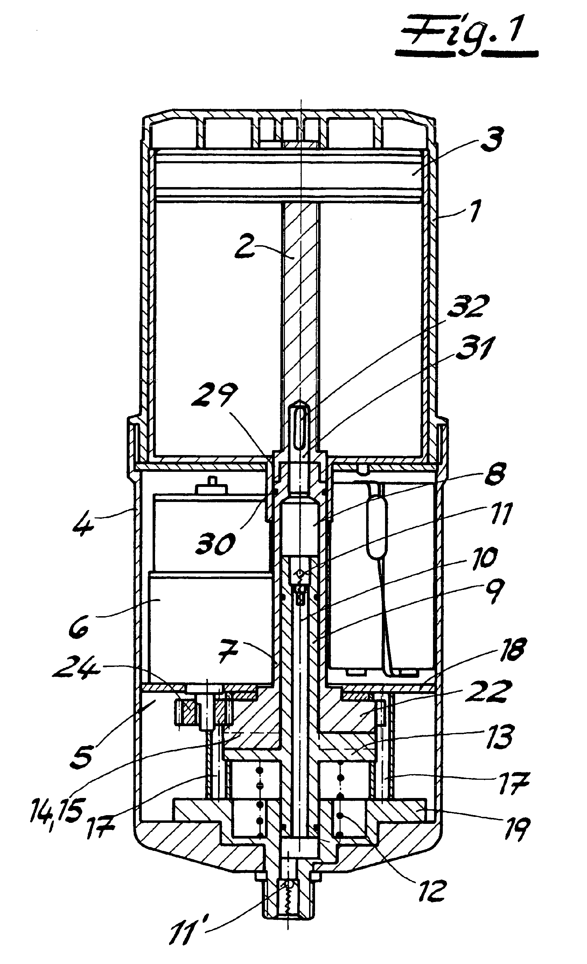

Die in Fig. 1 dargestellte Dosiervorrichtung für Schmierstoff weist einen Schmierstoffvorratsbehälter 1 mit einem auf einer Gewindespindel 2 angeordneten Kolben 3 und einen Antriebskopf 4 mit einem elektromechanischen Antrieb 5 auf. Die Gewindespindel 2 ist mit einer von einem Elektromotor 6 angetriebenen Antriebswelle 7 des Antriebskopfes 4 lösbar verbunden.

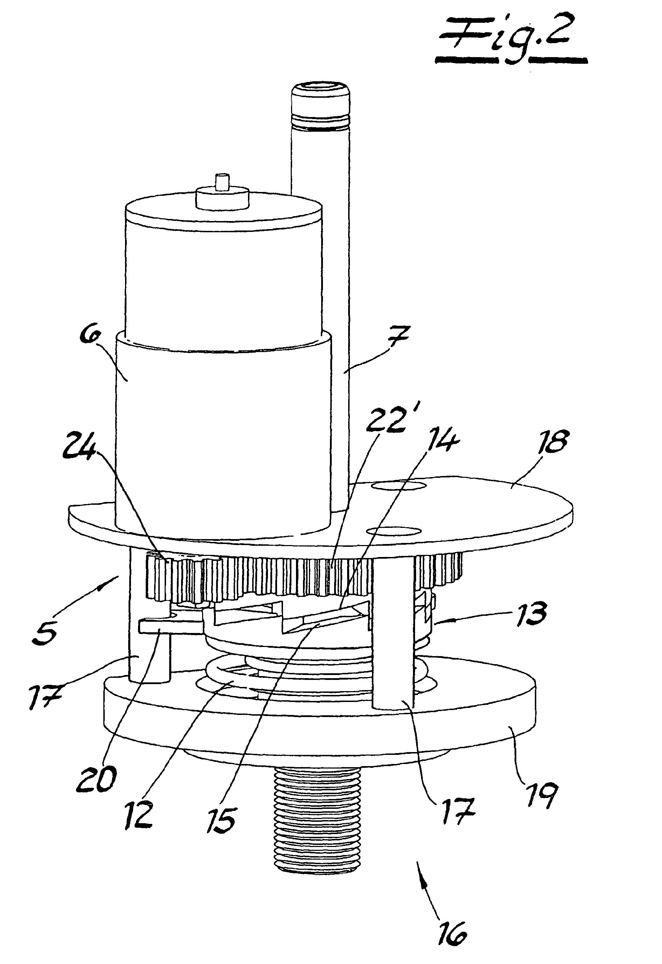

Die Antriebswelle 7 enthält einen Schmierstoffdurchlasskanal 8, der in den Schmierstoffvorratsraum des Schmierstoffvorratsbehälters 1 mündet. In den Schmierstoffdurchlasskanal 8 ist ein Stößel 9 eingesetzt, der eine Axialbohrung 10 mit einem einlassseitigen Rückschlagventil 11 sowie einen im Antriebskopf 4 drehfesten sowie an einer Druckfeder 12 axial beweglich abgestützten Stößelkopf 13 aufweist. Der Stößel_kopf 13 liegt unter der Wirkung der Druckfeder 12 an einer Steuerfläche 14 der Antriebswelle 7 an. Die Steuerfläche 14 und die zugeordnete Kontaktfläche 15 des Stößelkopfes 13 sind als Kulissenflächen ausgebildet, die bei einer Drehbewegung der Steuerfläche 14 Stößelhübe bewirken, welche den Schmierstoff durch die Bohrung des Stößels 9 zu einem Schmierstoffauslass am Stößelende fördern. Die Gestaltung der Kulissenflächen wird aus einer vergleichenden Betrachtung mit Fig. 2 deutlich. Die Kulissenflächen an der Steuerfläche 14 und der zugeordneten Kontaktfläche 15 des Stößelkopfes 13 sind komplementär ausgebildet und weisen keilförmige Gleitflächen und daran anschließende Absätze auf.

Der Elektromotor 6, die Antriebswelle 7, der Stößel 9 und die Druckfeder 12 sind zu einem in Fig. 2 dargestellten Antriebsaggregat 16 vereinigt. Das Antriebsaggregat 16 weist eine Trägerkonstruktion auf aus zwei durch Bolzen 17 miteinander verbundene Montageplatten 18, 19. An einer Montageplatte 18 ist der Elektromotor 6 angeflanscht und ist die Antriebswelle 7 gelagert. Die andere Montageplatte 19 weist einen mit dem Stößel 9 zusammenwirkenden Schmierstoffauslasskanal auf und bildet eine Abstützfläche für die Druckfeder 12. An den Stößelkopf 13 ist ein Gabelarm 20 als Drehsicherung angeformt, der an einem Bolzen 17 axial beweglich geführt ist.

Bezüglich der weiteren konstruktiven Gestaltung entnimmt man den Fig. 1 und 2, dass an die Antriebswelle 7 endseitig ein im Antriebskopf 4 axial abgestütztes Zahnrad 22' angeschlossen oder angeformt ist, das mit einem Ritzel 24 des Elektromotors 6 im Eingriff steht und die Steuerfläche 14 für die Stößelbewegungen aufweist. Das schmierstoffeinlassseitige Ende der Antriebswelle 7 ist in einem zylindrischen Fortsatz 29 des Schmierstoffvorratsbehälters geführt und mit einer Elastomerdichtung 30 gegen den Fortsatz 29 abgedichtet. Die Gewindespindel 2 weist an ihrem anschlussseitigen Ende eine Kopfbohrung 31 und mindestens ein in die Sackbohrung 31 mündende radiale Schmierstoffeintrittsöffnung 32 auf.

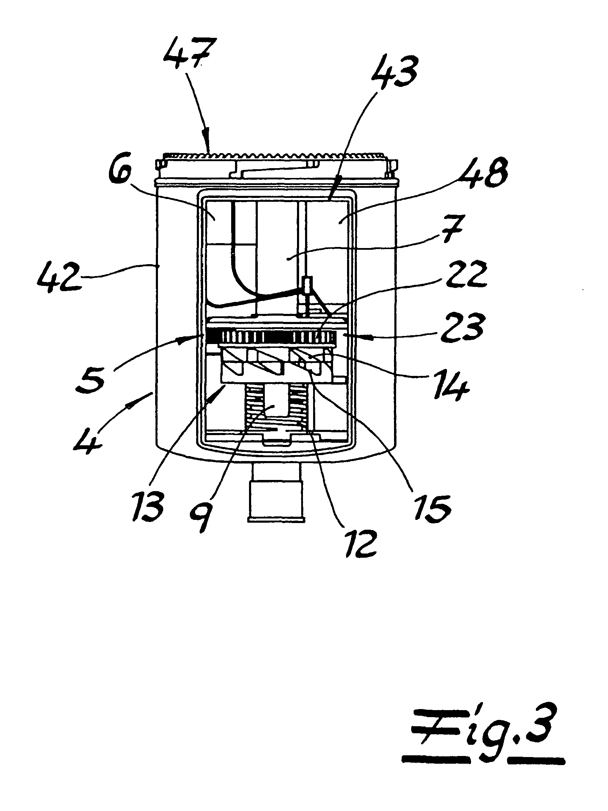

Bei der in Fig. 3 dargestellten Ausführung weist der Antriebskopf 4 ein Gehäuse 42 auf, das vorzugsweise als Metalldruckgussteil ausgebildet ist und Auflageflächen zur Befestigung einer Montageplatte 18, eine angeformte Rippe zur Axialführung des Stößelkopfes 13 und einen mit dem Stößel 9 zusammenwirkenden Schmierstoffauslasskanal aufweist. Der an den Stößelkopf 13 angeformte Gabelarm 20 ist an der gehäuseseitigen Rippe axial beweglich geführt. Der elektromechanische Antrieb 5 ist an der Montageplatte 18 angeordnet, während die Druckfeder 12 an dem Gehäuse 42 abgestützt ist.

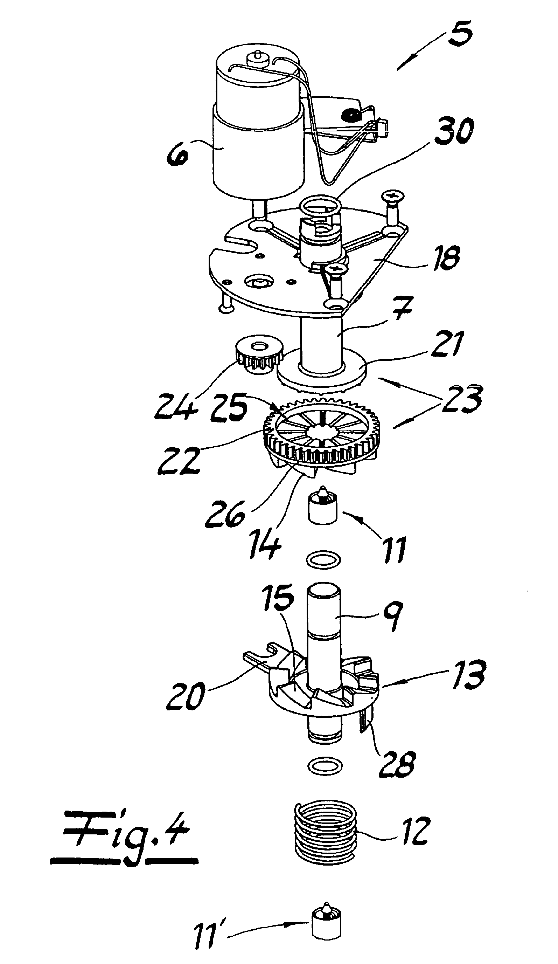

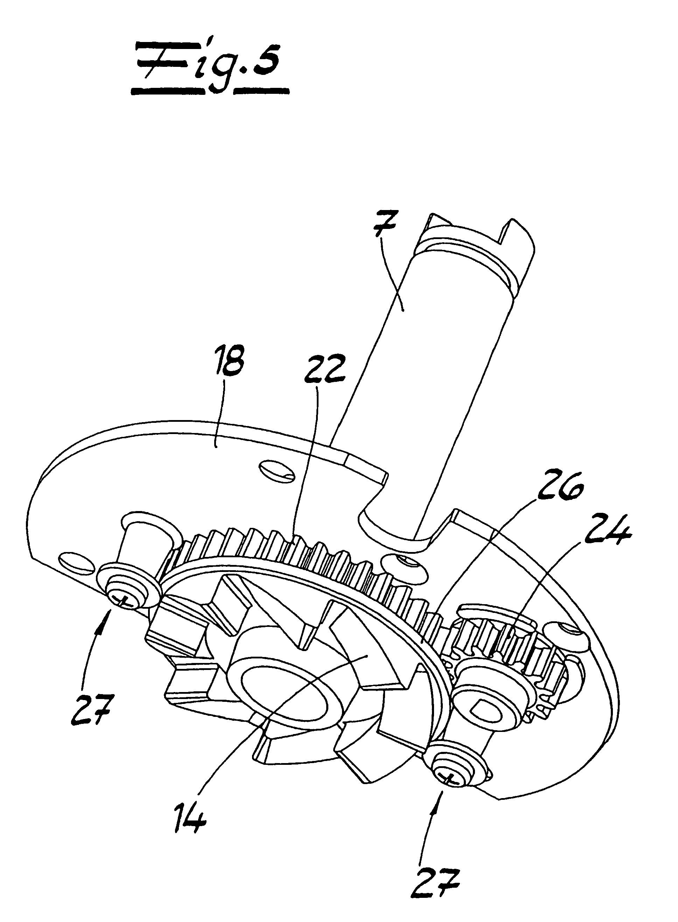

Aus der Explosionsdarstellung in Fig. 4 geht hervor, dass an die Antriebswelle 7 eine Kupplungsscheibe 21 angeformt ist. Ferner ist ein Zahnrad 22 vorgesehen, das an einer Stirnseite an der Kupplungsscheibe 21 anliegt und mit dieser eine Überlast kupplung 23 bildet. Das Zahnrad 22 ist von einem Ritzel 24 des elektromechanischen Antriebes 5 angetrieben und trägt an der anderen Stirnseite die bereits beschriebene Steuerfläche 14. Der Zahnkranz des Zahnrades 22 umschließt einen Aufnahmeraum für die an die Antriebswelle 7 angeformte Kupplungsscheibe 21. Das Zahnrad 22 ist auf die Kupplungsscheibe 21 aufgesetzt und am Umfang der Kupplungsscheibe 21 drehbeweglich geführt. Der Boden des Aufnahmeraumes weist ein Kupplungsprofil 25 aus Erhebungen und Vertiefungen auf, das mit Gegenflächen an der Kupplungsscheibe 21 im Eingriff steht. Aus der Darstellung in Fig. 5 wird ferner deutlich, dass das Zahnrad 22 eine ringförmige Bundfläche 26 zur Axiallagerung aufweist, und dass an der Montageplatte 18, an der der Elektromotor 6 befestigt und die Antriebswelle 7 gelagert ist, Stellelemente 27 angeordnet sind, die an der ringförmigen Bundfläche 26 des Zahnrades 22 anliegen und das Zahnrad 22 mit einer Andruckkraft, die auf das von der Überlastkupplung 23 zu übertragende Moment abgestimmt ist, an der Kupplungsscheibe 21 halten. Die Stellelemente 27 sind zweckmäßig als Federelemente ausgebildet.

Der Fig. 4 entnimmt man, dass an dem Stößelkopf 13 ein Zapfen 28 angeformt ist. Dieser wirkt mit einer nicht dargestellten Messeinrichtung zur Erfassung der von dem Stößel 9 ausgeführten Kolbenhübe zusammen und löst bei jeder Hubbewegung des Stößelkopfes 13 einen Zählimpuls aus.

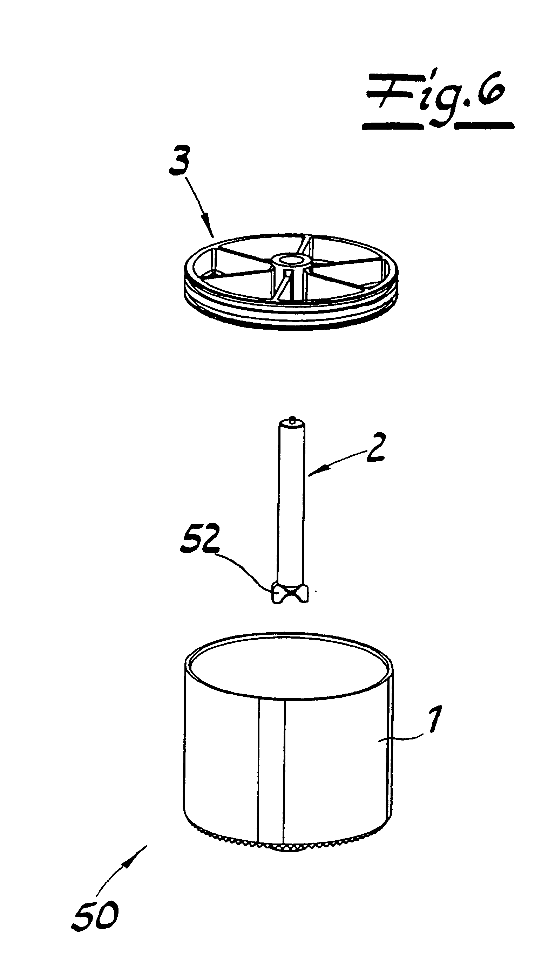

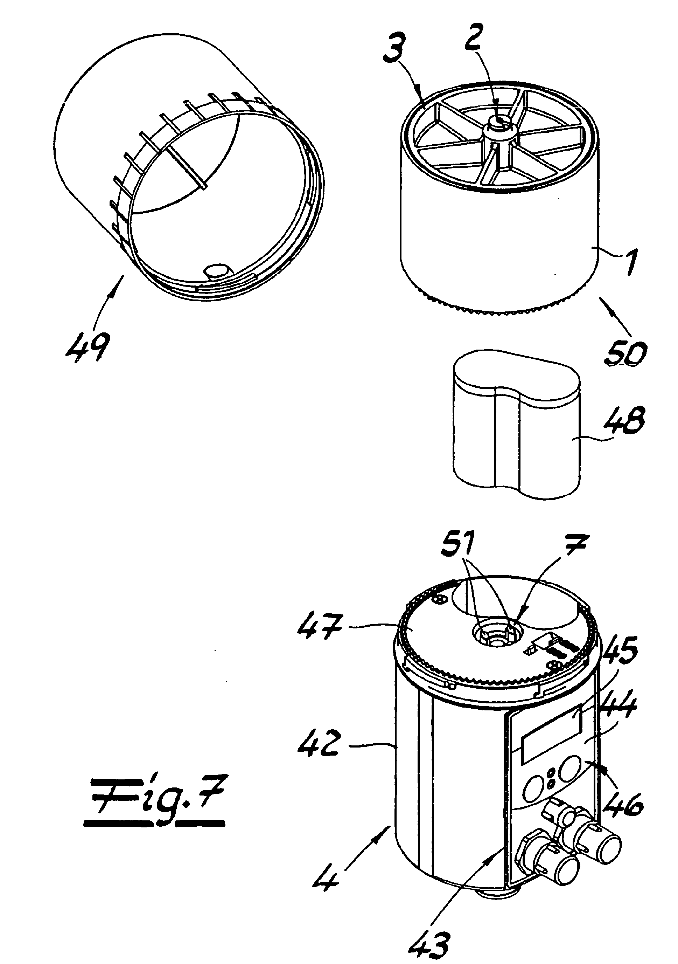

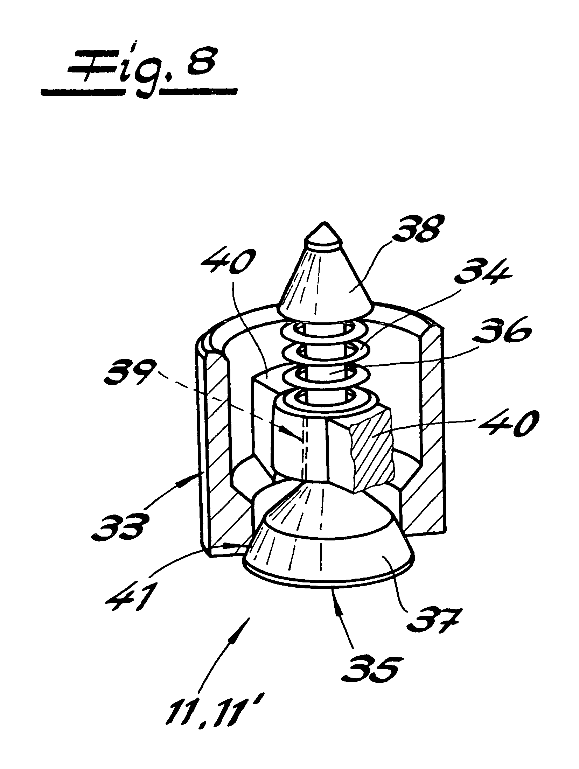

Bezüglich der weiteren konstruktiven Ausgestaltung des Antriebskopfes 4 entnimmt man den Fig. 3 bis 7, dass das vorzugsweise als Metalldruckgussteil ausgebildete Gehäuse 42 ein mantelseitiges Fenster 43 aufweist, in das eine Frontplatte 44 mit einer Anzeige 45 und einem Bedienfeld 46 eingesetzt ist. An der Rückseite der Frontplatte 44 ist eine Platine mit einer elektronischen Steuerung für den elektromechanischen Antrieb angeordnet. Auf dem Gehäuse 42 des Antriebskopfes 4 ist ein Deckel 47 angeordnet, der den Einbauraum des elektromechanischen Antriebs zum Schmierstoffvorratsbehälter hin abdeckt und Öffnungen für eine Kupplung zwischen der Antriebswelle 7 und der Gewindespindel 2 sowie für den Einschub von Batterien 48 aufweist. Auf dem Antriebskopf ist eine Kappe 49 lösbar befestigt, die einen Aufnahmeraum für eine austauschbare Schmierstoffkartusche 50 bildet. Die Schmierstoffkartusche 50 besteht aus dem Schmierstoffvorratsbehälter 1, der Gewindespindel 2 und dem Kolben 3.

Bei der in den Fig. 3 bis 7 dargestellten Ausführung weist das schmierstoffeinlassseitige Ende der Antriebswelle 7 Vorsprünge 51 auf, die mit einem anschlussseitigen Ende der Gewindespindel 2 eine Kupplung bilden. Das anschlussseitige Ende der Gewindespindel 2 ist als flaches Paddel 52 ausgebildet, welches einen Schmierstoffzufluss zur stirnseitigen Öffnung der Antriebswelle 7 zulässt. Durch die paddelförmige Ausbildung des Mitnehmers wird Bewegung in den Schmierstoff eingetragen und der Schmierstofffluss verbessert. Ferner zeichnet sich die Ausführung durch einen großen Einströmquerschnitt aus und stellt insofern eine besonders bevorzugte Ausgestaltung dar. Bei allen Ausführungen ist das schmierstoffeinlassseitige Ende der Antriebswelle 7 zweckmäßig in einem zylindrischen Fortsatz 29 des Schmierstoffvorratsbehälters geführt und mit einer Elastomerführung 30 gegen den Fortsatz 29 abgedichtet.

In die Axialbohrung des Stößels 9 ist ein Rückschlagventil 11 eingesetzt. Ein weiteres Rückschlagventil 11' ist im Ausführungsbeispiel im Schmierstoffauslasskanal vorgesehen. Der Aufbau der vorzugsweise verwendeten Rückschlagventile 11, 11' wird aus Fig. 8 deutlich. Das Rückschlagventil 11, 11' weist ein in den Schmierstoffkanal eingepasstes Ventilgehäuse 33 sowie einen von einer Druckfeder 34 beaufschlagten Ventilkörper 35 auf. Der Ventilkörper 35 besteht aus einem Stößel 36, einem endseitigen kegelförmigen Verschlusselement 37 und einem spitz zulaufenden Stößelkopf 38. Im Strömungsraum des Ventilgehäuses 33 ist eine Stößelführung 39 angeordnet, die durch einen Quersteg 40 an die Innenwand des Ventilgehäuses 33 angeschlossen ist. Die Druckfeder 34 ist zwischen der Stößelführung 39 und dem Stößelkopf 38 angeordnet und zieht das Verschlusselement 37 gegen einen Ventilsitz 41, der im Strömungsauslass des Ventilgehäuses 33 an der Außenseite des Ventilgehäuses 33 angeformt ist. Das Rückschlagventil 11, 11' weist einen im Vergleich zum Ventilgehäusedurchmesser großen Ringraum auf, der von dem Medium durchströmt wird. Der spitz zulaufende Stößelkopf 38 gewährleistet in Verbindung mit der Gestaltung des Ventilgehäuses 33 auch bei sehr viskosen Medien eine schnelle Schließbewegung des Ventilkörpers, die für einen ordnungsgemäßen Betrieb der Dosiervorrichtung erforderlich ist.

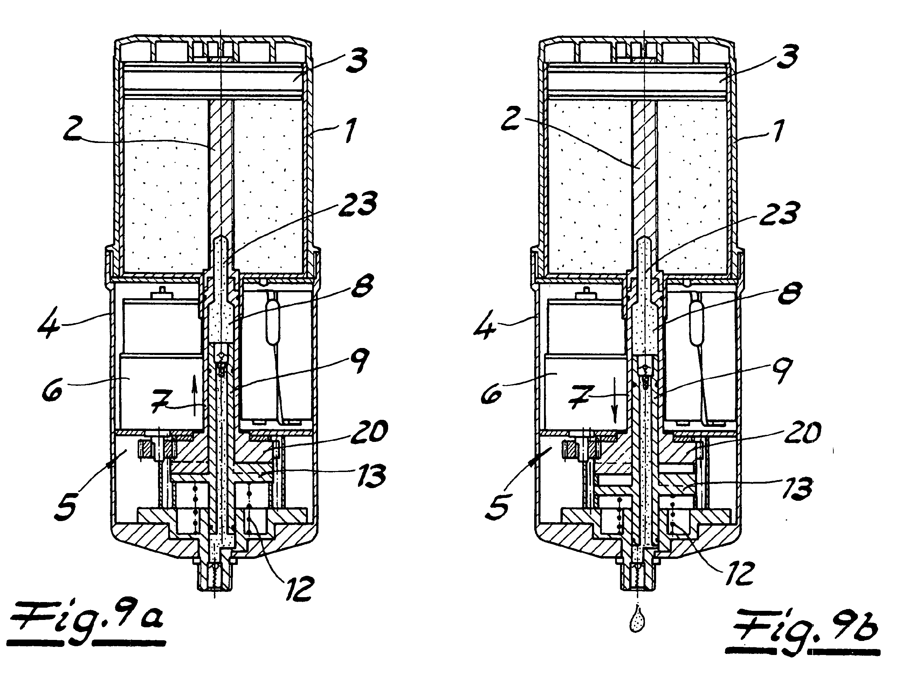

Die Funktion der Dosiervorrichtung wird aus einer vergleichenden Betrachtung der Fig. 9a und 9b deutlich. Bei einer Drehung der Antriebswelle 7 und der mit dieser verbundenen Gewindespindel 2 führt der im Schmierstoffvorratsbehälter 1 angeordnete Kolben 3 nach Maßgabe der Gewindesteigung der Gewindespindel 2 eine Stellbewegung aus. Dabei wird der Schmierstoff aus dem Schierstoffvorratsbehälter 1 verdrängt und dem Schmierstoffdurchlasskanal 8 der Antriebswelle 7 zugeführt. Gleichzeitig führt der Stößel 9 bei einer Drehung der Antriebswelle 7 Hubbewegungen aus, die durch die Kulissenflächen 14, 15 gesteuert sind. Bei einer in Fig. 9a dargestellten einwärts gerichteten Hubbewegung öffnet das Rückschlagventil 11 und gelangt Schmierstoff in die Bohrung des Stößels 9. Bei der anschließenden, in Fig. 9b dargestellten auswärts gerichteten Hubbewegung schließt das Rückschlagventil 11 und wird durch den auswärts gerichteten Stößelhub eine definierte Schmiermittelmenge ausgestoßen. Die Spendemenge ist auch bei hochviskosen Schmierstoffen und/oder sehr niedrigen Betriebstemperaturen reproduzierbar, da durch die kinematisch gekoppelte Bewegung des Kolbens 3 der Schmierstoffdurchlasskanal 8 der Antriebswelle 7 stets zwangsweise befüllt wird und durch die Stößelbewegung ein Schmierstoffaustrag mit hohem Auspressdruck möglich ist. Die erfindungsgemäße Vorrichtung zeichnet sich durch einen sehr einfachen mechanischen Aufbau aus. Vorteilhaft ist ferner, dass ohne Änderungen an dem Antriebskopf 4 unterschiedlich große Schmierstoffvorratsbehälter 1 angeschlossen werden können.

## Patentansprüche

1. Dosiervorrichtung für Schmierstoff mit einem Schmierstoffvorratsbehälter (1), einem auf einer Gewindespindel (2) angeordneten Kolben (3) innerhalb des Schmierstoffvorratsbehälters (1) und einem Antriebskopf (4), der eine an die Gewindespindel (2) angeschlossene Antriebswelle (7) und einen elektromechanischen Antrieb (5) zur Betätigung der Antriebswelle (7) aufweist,
**dadurch gekennzeichnet,**
**dass** die Antriebswelle (7) einen Schmierstoffdurchlasskanal (8) enthält, der in den Schmierstoffvorratsraum des Schmierstoffvorratsbehälters (1) mündet,
**dass** in den Schmierstoffdurchlasskanal (8) der Antriebswelle (7) ein Stößel (9) eingesetzt ist, der eine Axialbohrung (10) mit einem einlassseitigen Rückschlagventil (11) sowie einen drehfest angeordneten und von einer Druckfeder (12) belasteten Stößelkopf (13) aufweist, und
**dass** der Stößelkopf (13) unter der Wirkung der Druckfeder (12) an einer Steuerfläche (14) der Antriebswelle (7) anliegt,
wobei die Steuerfläche (14) und die zugeordnete Kontaktfläche (15) des Stößelkopfes (13) als Kulissenflächen ausgebildet sind, die bei einer Drehbewegung der Steuerfläche (14) Hubbewegungen des Stößels (9) bewirken, welche den Schmierstoff durch die Axialbohrung (10) des Stößels (9) zu einem Schmierstoffauslass am Stößelende fördern.

2. Dosiervorrichtung nach Anspruch 1, **dadurch gekennzeichnet, dass** an die Antriebswelle (7) endseitig ein im Antriebskopf (4) abgestütztes Zahnrad (22') angeschlossen oder angeformt ist, das mit einem Ritzel (24) eines Elektromotors (6) im Eingriff steht und die Steuerfläche (14) für die Stößelbewegungen aufweist.

3. Dosiervorrichtung nach Anspruch 1, **dadurch gekennzeichnet, dass** die Antriebswelle (7) endseitig mit einer fest angeschlossenen Kupplungsscheibe (21) versehen ist und dass der elektromechanische Antrieb (5) ein von einem Ritzel (24) angetriebenes Zahnrad (22) umfasst, das an der Kupplungsscheibe (21) anliegt und mit diesem eine Überlastkupplung (23) bildet, wobei das Zahnrad (22) außerdem die mit dem Stößelkopf (13) zusammenwirkende Steuerfläche (14) aufweist.

4. Dosiervorrichtung nach Anspruch 3, **dadurch gekennzeichnet, dass** das Zahnrad (22) einen Zahnkranz aufweist, der einen Aufnahmeraum für die an den Stößel (9) angeformte Kupplungsscheibe (21) ringförmig umschließt, dass das Zahnrad (22) auf die Kupplungsscheibe (21) aufgesetzt und am Umfang der Kupplungsscheibe (21) drehbeweglich geführt ist und dass der Boden des Aufnahmeraumes ein Kupplungsprofil (25) aus Erhebungen oder Vertiefungen aufweist, das mit Gegenflächen an der Kupplungsscheibe (21) im Eingriff steht.

5. Dosiervorrichtung nach Anspruch 3 oder 4, **dadurch gekennzeichnet, dass** der Antriebskopf (4) eine Montage-platte (18) aufweist, an der ein Elektromotor (6) befestigt und die Antriebswelle (7) gelagert ist, dass das Zahnrad (22) eine ringförmige Bundfläche (26) zur Axiallagerung aufweist, und dass an der Montageplatte (18) Stellelemente (27) angeordnet sind, die an der ringförmigen Bundfläche (26) des Zahnrades (22) anliegen und das Zahnrad (22) mit einer Andruckkraft, die auf das von der Überlastkupplung (23) zu übertragende Drehmoment abgestimmt ist, an der Kupplungsscheibe (21) halten.

6. Dosiervorrichtung nach einem der Ansprüche 1 bis 5, **dadurch gekennzeichnet, dass** an den Stößelkopf (13) ein Gabelarm (20) als Drehsicherung angeformt ist, der mit einem gehäusefesten Element (17) des Antriebskopfes (4) zusammenwirkt.

7. Dosiervorrichtung nach einem der Ansprüche 1 bis 6, **dadurch gekennzeichnet, dass** der Antriebskopf (4) eine Messeinrichtung zur Erfassung der von dem Stößel (9) ausgeführten Kolbenhübe aufweist.

8. Dosiervorrichtung nach Anspruch 7, **dadurch gekennzeichnet, dass** an den Stößelkopf (13) ein Zapfen (28) angeformt ist, der mit der Messeinrichtung zusammenwirkt und bei jeder Hubbewegung einen Zählimpuls auslöst.

9. Dosiervorrichtung nach einem der Ansprüche 1 bis 8, **dadurch gekennzeichnet, dass** das schmierstoffeinlassseitige Ende der Antriebswelle (7) in einem zylindrischen Fortsatz (29) des Schmierstoffvorratsbehälters (1) geführt und mit einer Elastomerdichtung (30) gegen den Fortsatz (29) abgedichtet ist.

10. Dosiervorrichtung nach einem der Ansprüche 1 bis 9, **dadurch gekennzeichnet, dass** die Antriebswelle (7) durch eine Steckkupplung mit der Gewindespindel (2) verbunden ist.

11. Dosiervorrichtung nach einem der Ansprüche 1 bis 10, **dadurch gekennzeichnet, dass** die Gewindespindel (2) an ihrem anschlussseitigen Ende eine Sackbohrung (31) und mindestens eine in die Sackbohrung (31) mündende radiale Schmierstoffeintrittsöffnung (32) aufweist.

12. Dosiervorrichtung nach einem der Ansprüche 1 bis 10, **dadurch gekennzeichnet, dass** das schmierstoffeinlassseitige Ende der Antriebswelle (7) Vorsprünge (51) aufweist, die mit einem anschlussseitigen Ende der Gewindespindel (2) eine Kupplung bilden, und dass das anschlussseitige Ende der Gewindespindel (2) als flaches Paddel (52) ausgebildet ist, welches einen Schmierstoffzufluss zur stirnseitigen Öffnung der Antriebswelle (7) zulässt.

13. Dosiervorrichtung nach einem der Ansprüche 1 bis 12, **dadurch gekennzeichnet, dass** der Antriebskopf (4) zwei durch Bolzen (17) verbundene Montageplatten (18, 19) als Trägerkonstruktion aufweist, wobei der elektromechanische Antrieb (5) an einer Montageplatte (18) angeordnet ist und wobei die andere Montageplatte (19) einen mit dem Stößel (9) zusammenwirkenden Schmierstoffauslasskanal aufweist sowie eine Abstützfläche für die Druckfeder (12) bildet und wobei der Stößelkopf (13) axial beweglich an einem Bolzen (17) geführt ist.

14. Dosiervorrichtung nach einem der Ansprüche 1 bis 12, **dadurch gekennzeichnet, dass** der Antriebskopf (4) ein Gehäuse (42) aufweist, das Auflageflächen zur Befestigung einer Montageplatte (18), eine angeformte Rippe zur Axialführung des Stößelkopfes (13) und einen mit dem Stößel (9) zusammenwirkenden Schmierstoffauslasskanal aufweist, wobei der elektromechanische Antrieb (5) an der Montageplatte (18) angeordnet und die Druckfeder (12) an dem Gehäuse (42) abgestützt ist.

15. Dosiervorrichtung nach Anspruch 14, **dadurch gekennzeichnet, dass** das Gehäuse (42) ein mantelseitiges Fenster (43) aufweist, in das eine Frontplatte (44) mit einem Anzeige- und Bedienfeld (45, 46) eingesetzt ist, wobei an der Rückseite der Frontplatte (44) eine Platine mit einer elektronischen Steuerung für den elektromechanischen Antrieb (5) angeordnet ist.

16. Dosiervorrichtung nach Anspruch 14 oder 15, **dadurch gekennzeichnet, dass** auf dem Gehäuse (42) ein Deckel (47) angeordnet ist, der den Einbauraum des elektromechanischen Antriebs zum Schmierstoffvorratsbehälter abdeckt und Öffnungen für die Kupplung zwischen der Antriebswelle (7) und der Gewindespindel (2) sowie für den Einschub von Batterien (48) aufweist.

17. Dosiervorrichtung nach einem der Ansprüche 1 bis 16, **dadurch gekennzeichnet, dass** auf dem Antriebskopf (4) eine Kappe (49) lösbar befestigt ist, die einen Aufnahmeraum für eine austauschbare Schmierstoffkartusche (50) bildet.

18. Dosiervorrichtung nach einem der Ansprüche 1 bis 17, **dadurch gekennzeichnet, dass** das Rückschlagventil (11) ein in die Axialbohrung (10) des Stößels (9) eingepasstes Ventilgehäuse (33) mit einem von einer Druckfeder (34) beaufschlagten Ventilkörper (35) aufweist, wobei der Ventilkörper (35) aus einem Ventilstößel (36), einem endseitigen kegelförmigen Verschlusselement (37) und einem spitz zulaufenden Stößelkopf (38) besteht, wobei im Strömungsraum des Ventilgehäuses (33) eine Stößelführung (39) angeordnet ist, die durch einen Quersteg (40) an die Innenwand des Ventilgehäuses (33) angeschlossen ist, und wobei die Druckfeder (34) zwischen der Stößelführung (39) und dem Stößelkopf (38) angeordnet ist und das Verschlusselement (37) gegen einen Ventilsitz (41) zieht, der im Strömungsauslass des Ventilgehäuses (33) an der Außenseite des Ventilgehäuses (33) angeformt ist.

19. Dosiervorrichtung nach einem der Ansprüche 1 bis 18, **dadurch gekennzeichnet, dass** im Schmierstoffauslasskanal ein zweites Rückschlagventil (11') angeordnet ist.

## Claims

1. A dosing device for lubricant with a lubricant reservoir (1), a piston (3) disposed on a threaded spindle (2) within the lubricant reservoir (1), a driving head (4) equipped with a drive shaft (7), which is connected to the threaded spindle (2), and with an electromechanical drive (5) for actuation of the drive shaft (7),
**Characterised in**
**that** the drive shaft (7) contains a lubricant duct (8), which opens out into the lubricant chamber of the lubricant reservoir (1),
**that** inserted in the lubricant duct (8) of the drive shaft (7) is a plunger (9) equipped with an axial aperture (10) with a non-return valve (11) on the inlet side and a plunger head (13) disposed with rotational resistance and under load from a compression spring (12), and,
**that** under the action of the compression spring (12), the plunger head (13) bears on a control surface (14) of the drive shaft (7),
wherein the control surface (14) and the associated contact surface (15) of the plunger head (13) take the form of linkage surfaces, which, when the control surface (14) executes a rotary movement, cause the plunger (9) to execute lifting movements, which convey the lubricant through the axial aperture (10) of the plunger (9) to a lubricant outlet at the plunger end.

2. A dosing device according to Claim 1, **characterised in that** connected to or integrally formed with the drive shaft (7) at its bottom end, and supported in the driving head (4), is a toothed wheel (22'), which is engaged with a pinion (24) of an electric motor (6) and equipped with the control surface (14) for the plunger movements.

3. A dosing device according to Claim 1, **characterised in that** the drive shaft (7) is equipped at its bottom end with a permanently connected coupling disc (21), and wherein the electromechanical drive (5) comprises a toothed wheel (22) driven by a pinion (24), which toothed wheel bears on the coupling disc (21) and, together therewith, forms an overload coupling (23), the toothed wheel (22) being additionally equipped with the control surface (14), which interacts with the plunger head (13).

4. A dosing device according to Claim 3, **characterised in that** the toothed wheel (22) is equipped with a toothed rim, which encloses in annular fashion an accommodation space for the coupling disc (21) integrally formed on the plunger (9), **in that** the toothed wheel (22) is located onto the coupling disc (21) and carried so as to be rotatably movable on the periphery of the coupling disc (21), and **in that** the base of the accommodation space is equipped with a coupling profile (25) comprising elevations or depressions, which engages with the counter-surfaces on the coupling disc (21).

5. A dosing device according to Claim 3 or 4, **characterised in that** the driving head (4) is equipped with a mounting plate (18), to which an electric motor (6) is secured and on which the drive shaft (7) is supported, **in that** the toothed wheel (22) is equipped with an annular collared surface (26) for axial support, and **in that** disposed on the mounting plate (18) are positioning components (27), which bear on the annular collared surface (26) of the toothed wheel (22) and hold the toothed wheel (22) on the coupling disc (21) with a contact force matched to the torque to be transmitted by the overload coupling (23).

6. A dosing device according to any one of Claims 1 to 5, **characterised in that** integrally formed on the plunger head (13) as rotational security is a forked arm (20), which interacts with a housing-secured component (17) of the driving head (4).

7. A dosing device according to any one of Claims 1 to 6, **characterised in that** the driving head (4) is equipped with a measuring device for detecting the piston strokes executed by the plunger (9).

8. A dosing device according to Claim 7, **characterised in that** integrally formed on the plunger head (13) is a journal (28), which interacts with the measuring device and emits a counting pulse for every stroke movement.

9. A dosing device according to any one of Claims 1 to 8, **characterised in that** the end of the drive shaft (7) on the lubricant inlet side is arranged in a cylindrical extension (29) of the lubricant reservoir (1) and sealed against the extension (29) with an elastomer seal (30).

10. A dosing device according to any one of Claims 1 to 9, **characterised in that** the drive shaft (7) is connected to the threaded spindle (2) by means of a plug-in coupling.

11. A dosing device according to any one of Claims 1 to 10, **characterised in that** the threaded spindle (2) is equipped at its connection-side end with a blind hole (31) and with at least one radial lubricant-inlet port (32) opening into the blind hole (31).

12. A dosing device according to any one of Claims 1 to 10, **characterised in that** the end of the drive shaft (7) on the lubricant-inlet side is equipped with projections (51), which, together with an end of the threaded spindle (2) on the connection side, form a coupling, and **in that** the end of the threaded spindle (2) on the connection side takes the form of a flat paddle (52), which permits a flow of lubricant towards the port on the front face of the drive shaft (7).

13. A dosing device according to any one of Claims 1 to 12, **characterised in that** the driving head (4) is equipped with two mounting plates (18, 19) connected by pins (17) as a carrying structure, the electromechanical drive (5) being disposed on one mounting plate (18) and the other mounting plate (19) being equipped with a lubricant-emission duct interacting with the plunger (9) and forming a support surface for the compression spring (12), and the plunger head (13) being arranged on a pin (17) so as to be axially moveable.

14. A dosing device according to any one of Claims 1 to 12, **characterised in that** the driving head (4) is equipped with a housing (42), which is equipped with support surfaces for securing a mounting plate (18), an integrally formed rib for the axial guidance of the plunger head (13) and a lubricant-emission duct interacting with the plunger (9), the electromechanical drive (5) being disposed on the mounting plate (18) and the compression spring (12) being supported on the housing (42).

15. A dosing device according to Claim 14, **characterised in that** the housing (42) is equipped with a window (43) on the outer-casing side, into which a front panel (44) with a display panel and an operating panel (45, 46) is inserted, a PCB with an electronic control system for the electromechanical drive (5) being disposed on the rear of the front panel (44).

16. A dosing device according to Claim 14 or 15, **characterised in that** disposed on the housing (42) is a cover (47), which covers the installation space between the electromechanical drive and the lubricant reservoir and is equipped with ports for the coupling between the drive shaft (7) and the threaded spindle (2) and for the insertion of batteries (48).

17. A dosing device according to any one of Claims 1 to 16, **characterised in that** secured on the driving head (4) so as to be removable is a cap (49), which forms an accommodation space for an exchangeable lubricant cartridge (50).

18. A dosing device according to any one of Claims 1 to 17, **characterised in that** the non-return valve (11) is equipped with a valve housing (33) fitting into the axial aperture (10) of the plunger (9) and having a valve body (35) acted upon by a compression spring (34), the valve body (35) comprising a valve plunger (36), an end-located conical sealing component (37) and a tapering plunger head (38), with, disposed in the flow space of the valve housing (33), a plunger guideway (39), which is connected to the inside wall of the valve housing (33) by means of a transverse lug (40), the compression spring (34) being disposed between the plunger guideway (39) and the plunger head (38), and the sealing component (37) pulling against a valve seat (41), which is integrally formed on the exterior of the valve housing (33) in the flow outlet of the valve housing (33).

19. A dosing device according to any one of Claims 1 to 18, **characterised in that** a second non-return valve (11') is disposed in the lubricant-emission duct.

## Revendications

1. Dispositif de dosage pour lubrifiant comportant un réservoir de lubrifiant (1), un piston (3) disposé sur une tige filetée (2) à l'intérieur du réservoir de lubrifiant (1) et une tête d'entraînement (4) qui comprend un arbre d'entraînement (7) raccordé à la tige filetée (2) et un entraînement électromécanique (5) pour actionner l'arbre d'entraînement (7),
**caractérisé en ce**
**que** l'arbre d'entraînement (7) contient un canal de passage de lubrifiant (8) qui débouche dans l'espace de réserve du réservoir de lubrifiant (1),
**que** dans le canal de passage de lubrifiant (8) de l'arbre d'entraînement (7) est inséré un coulisseau (9) qui présente un perçage axial (10) comportant une soupape anti-retour (11) du côté entrée, ainsi qu'une tête de coulisseau (13) montée sans rotation possible et contrainte par un ressort de pression (12), et
**que** sous l'action du ressort de pression (12), la tête de coulisseau (13) repose contre une surface de commande (14) de l'arbre d'entraînement (7),
la surface de commande (14) et la surface de contact (15) associée de la tête de coulisseau (13) étant réalisées sous forme de surfaces de coulisses qui, lors d'un mouvement rotatif de la surface de commande (14), entraînent des mouvements de course du coulisseau (9) qui acheminent le lubrifiant à travers le perçage axial (10) du coulisseau (9) à une sortie de lubrifiant à l'extrémité du coulisseau.

2. Dispositif de dosage selon la revendication 1, **caractérisé en ce qu'**une roue dentée (22') en appui dans la tête d'entraînement (4) est raccordée ou formée sur l'arbre d'entraînement (7) du côté extrémité, la roue dentée étant en prise avec un pignon (24) d'un moteur électrique (6) et comportant la surface de commande (14) pour les mouvements de coulisseau.

3. Dispositif de dosage selon la revendication 1, **caractérisé en ce que** l'arbre d'entraînement (7) est pourvu, du côté extrémité, d'un disque d'accouplement (21) raccordé fermement et que l'entraînement électromécanique (5) comprend une roue dentée (22) entraînée par un pignon (24) qui est accolée au disque d'accouplement (21) et forme avec celui-ci un accouplement de surcharge (23), la roue dentée (22) comportant en outre la surface de commande (14) coopérant avec la tête de coulisseau (13).

4. Dispositif de dosage selon la revendication 3, **caractérisé en ce que** la roue dentée (22) comporte une couronne dentée qui entoure annulairement un espace de logement pour le disque d'accouplement (21) formé sur le coulisseau (9), **en ce que** la roue dentée (22) est posée sur le disque d'accouplement (21) et est guidée en rotation sur le pourtour du disque d'accouplement (21) et **en ce que** le fond de l'espace de logement comporte un profilé d'accouplement (25) constitué d'élévations ou de cavités, qui est en prise avec des surfaces antagonistes sur le disque d'accouplement (21).

5. Dispositif de dosage selon la revendication 3 ou 4,
**caractérisé en ce que** la tête d'entraînement (4) comporte une plaque de montage (18) sur laquelle est fixé un moteur électrique (6) et est supporté l'arbre d'entraînement (7), **en ce que** la roue dentée (22) comporte une surface de liaison (26) annulaire pour le support axial et **en ce que** des éléments de réglage (27) sont disposés sur la plaque de montage (18), ces éléments de réglage étant accolés à la surface de liaison (26) annulaire de la roue dentée (22) et maintenant la roue dentée (22) contre le disque d'accouplement (21) avec une force de pression qui est adaptée au couple de rotation à transmettre par l'accouplement de surcharge (23).

6. Dispositif de dosage selon l'une quelconque des revendications 1 à 5, **caractérisé en ce qu'**un bras de fourche (20) tenant lieu de sûreté anti-rotation, et coopérant avec un élément (17) de la tête d'entraînement (4) fixe sur le boîtier, est formé sur la tête de coulisseau (13).

7. Dispositif de dosage selon l'une quelconque des revendications 1 à 6, **caractérisé en ce que** la tête d'entraînement (4) comporte un dispositif de mesure pour détecter les courses de piston effectuées par le coulisseau (9).

8. Dispositif de dosage selon la revendication 7, **caractérisé en ce qu'**un ergot (28), qui coopère avec le dispositif de mesure et déclenche une impulsion de comptage à chaque mouvement de course, est formé sur la tête de coulisseau (13).

9. Dispositif de dosage selon l'une quelconque des revendications 1 à 8, **caractérisé en ce que** l'extrémité du côté entrée de lubrifiant de l'arbre d'entraînement (7) est guidée dans un prolongement (29) cylindrique du réservoir de lubrifiant (1) et est rendue étanche par rapport au prolongement (29) par un joint d'étanchéité en élastomère (30).

10. Dispositif de dosage selon l'une quelconque des revendications 1 à 9, **caractérisé en ce que** l'arbre d'entraînement (7) est relié à la tige filetée (2) par un accouplement enfiché.

11. Dispositif de dosage selon l'une quelconque des revendications 1 à 10, **caractérisé en ce que** la tige filetée (2) comporte à son extrémité du côté raccordement un trou borgne (31) et au moins une ouverture d'entrée de lubrifiant (32) radiale débouchant dans le trou borgne (31).

12. Dispositif de dosage selon l'une quelconque des revendications 1 à 10, **caractérisé en ce que** l'extrémité du côté admission de lubrifiant de l'arbre d'entraînement (7) comporte des saillies (51) qui forment un accouplement avec une extrémité du côté raccordement de la tige filetée (2) et **en ce que** l'extrémité du côté raccordement de la tige filetée (2) est réalisée sous forme de coussinet plat (52) qui permet une arrivée de lubrifiant vers l'ouverture du côté frontal de l'arbre d'entraînement (7).

13. Dispositif de dosage selon l'une quelconque des revendications 1 à 12, **caractérisé en ce que** la tête d'entraînement (4) comporte deux plaques de montage (18, 19) tenant lieu de structure de support, reliées par des goujons (17), l'entraînement électromécanique (5) étant disposé sur l'une des plaques de montage (18) et l'autre plaque de montage comportant un canal de sortie de lubrifiant coopérant avec le coulisseau (9) ainsi que formant une surface d'appui pour le ressort de pression (12), la tête de coulisseau (13) étant guidée mobile axialement sur un goujon (17).

14. Dispositif de dosage selon l'une quelconque des revendications 1 à 12, **caractérisé en ce que** la tête d'entraînement (4) comporte un boîtier (42) qui comprend des surfaces d'appui pour fixer une plaque de montage (18), une nervure formée pour guider axialement la tête de coulisseau (13) et un canal de sortie de lubrifiant coopérant avec le coulisseau (9), l'entraînement électromécanique (5) étant disposé sur la plaque de montage (18) et le ressort de pression (12) étant supporté sur le boîtier (42).

15. Dispositif de dosage selon la revendication 14, **caractérisé en ce que** le boîtier (42) comporte une fenêtre (43) du côté enveloppe, dans laquelle une plaque frontale (44) comportant un pavé d'affichage et de commande (45, 46) est insérée, une platine comportant une commande électronique pour l'entraînement électromécanique (5) étant montée sur la face arrière de la plaque frontale (44).

16. Dispositif de dosage selon la revendication 14 ou 15, **caractérisé en ce qu'**un couvercle (47) est disposé sur le boîtier (42), ce couvercle recouvrant l'espace de montage de l'entraînement électromécanique par rapport au réservoir de lubrifiant et comportant des ouvertures pour l'accouplement de l'arbre d'entraînement (7) et de la tige filetée (2) ainsi que pour l'insertion de piles (48).

17. Dispositif de dosage selon l'une quelconque des revendications 1 à 16, **caractérisé en ce qu'**un capuchon (49), qui forme un espace de logement pour une cartouche de lubrifiant (50) remplaçable, est fixé de manière amovible sur la tête d'entraînement (4).

18. Dispositif de dosage selon l'une quelconque des revendications 1 à 17, **caractérisé en ce que** la soupape anti-retour (11) comporte un carter de soupape (33) inséré dans le perçage axial (10) du coulisseau (9) et comportant un corps de soupape (35) contraint par un ressort de pression (34), le corps de soupape (35) étant constitué d'un coulisseau de soupape (36), d'un élément obturateur (37) conique à son extrémité et d'une tête de coulisseau (38) se terminant en pointe, un guide de coulisseau (39), qui est raccordé par une entretoise transversale (40) à la paroi intérieure du carter de soupape (33), étant disposé dans l'espace d'écoulement du carter de soupape (33), et le ressort de pression (34) étant disposé entre le guide de coulisseau (39) et la tête de coulisseau (38) et tirant l'élément obturateur (37) contre un siège de soupape (41) qui est formé dans la sortie d'écoulement du carter de soupape (33) sur le côté extérieur du carter de soupape (33).

19. Dispositif de dosage selon l'une quelconque des revendications 1 à 18, **caractérisé en ce qu'**une seconde soupape anti-retour (11') est disposée dans le canal de sortie de lubrifiant.
